(19) **Europäisches Patentamt**

**European Patent Office**

**Office européen des brevets**

(11) **EP 1 530 669 B1**

(12) **EUROPÄISCHE PATENTSCHRIFT**

(45) Veröffentlichungstag und Bekanntmachung des Hinweises auf die Patenterteilung:
**06.12.2006 Patentblatt 2006/49**

(21) Anmeldenummer: **03747873.2**

(22) Anmeldetag: **01.08.2003**

(51) Int Cl.:
*F01D 5/28* (2006.01)     *G01N 27/90* (2006.01)
*G01N 27/82* (2006.01)     *G01B 1/00* (2006.01)

(86) Internationale Anmeldenummer:
**PCT/EP2003/008558**

(87) Internationale Veröffentlichungsnummer:
**WO 2004/027217 (01.04.2004 Gazette 2004/14)**

(54) **VERFAHREN ZUR ZERSTÖRUNGSFREIEN PRÜFUNG EINES BAUTEILS**

METHOD FOR TESTING A COMPONENT IN A NON-DESTRUCTIVE MANNER

PROCEDE POUR EFFECTUER UN ESSAI NON DESTRUCTIF SUR UNE PIECE

(84) Benannte Vertragsstaaten:
**DE ES FR GB IT**

(30) Priorität: **23.08.2002 EP 02018897**

(43) Veröffentlichungstag der Anmeldung:
**18.05.2005 Patentblatt 2005/20**

(73) Patentinhaber: **SIEMENS AKTIENGESELLSCHAFT**
**80333 München (DE)**

(72) Erfinder:
• **BECK, Thomas**
**16341 Zepernick (DE)**
• **REICHE, Ralph**
**13465 Berlin (DE)**
• **WILKENHÖNER, Rolf**
**10589 Berlin (DE)**

(56) Entgegenhaltungen:
**EP-A- 1 085 526       CH-A- 673 896**
**US-A- 4 853 634       US-A- 5 028 100**
**US-A- 5 140 264       US-A- 6 051 972**
**US-A1- 2001 009 368**

**Beschreibung**

Die Erfindung betrifft ein Verfahren zur zerstörungsfreien Prüfung eines Bauteils.

Die WO 97/23762 offenbart ein Verfahren zur Schichtdickenmessung, das davon ausgeht, dass eine elektrisch leitende Schicht auf einem Grundwerkstoff vorliegt, wobei die Leitfähigkeiten von Schicht und Grundwerkstoff unterschiedlich sein müssen. Das Verhältnis der Leitfähigkeit von Schicht und Grundwerkstoff ist auf ein Verhältnis von 0,7 bis 1,5 eingeschränkt. Außerdem werden insbesondere Wechselströme in einem Bereich von 1,5 bis 3,5 MHz verwendet.

Die GB 22 79 75 A1 beschreibt Leitfähigkeitsmessungen im oberflächennahen Bereich für Werkstoffe mit hoher magnetischer Permeabilität, die man nur in magnetischer Sättigung prüfen kann.

Die US-PS 5,793,206 beschreibt eine Messsonde zur Schichtdickenmessung.

Diese Verfahren beziehungsweise die Sonden haben den Nachteil, dass sie nur Schichtdicken bestimmen können.

In dem Buch von H. Blumenauer "Werkstoffprüfung", 5. Aufl., VEB Deutscher Verlag für Grundstoffindustrie, Leipzig 1989, ist die zerstörungsfreie Werkstoffprüfung mit dem Wirbelstromverfahren beschrieben. Es beruht darauf, dass das elektromagnetische Wechselfeld einer von Wechselstrom durchflossenen Spule verändert wird, wenn eine metallische Probe in ihren Wirkungsbereich gebracht wird. Durch das Primärfeld der Spule wird in der zu untersuchenden Probe eine Wechselspannung induziert, die ihrerseits einen Wechselstrom erzeugt, der seinerseits wiederum ein magnetisches Wechselfeld erzeugt. Dieses sekundäre Wechselfeld wirkt charakteristischerweise dem Primärfeld entgegen und verändert somit dessen Parameter. Die Veränderung lässt sich messtechnisch erfassen. Dazu wird beispielsweise bei Spulen mit Primär- und Sekundärwicklung die Sekundärspannung gemessen (transformatorisches Prinzip). Oder es wird, beispielsweise bei Spulen mit nur einer Wicklung, deren Scheinwiderstand ermittelt (parametrisches Prinzip). Gemäß der in einem Wechselstromkreis geltenden Gesetze wird durch die Induktion in der Spule und in der Probe bei der parametrischen Anordnung außer dem Ohm'schen Widerstand noch ein induktiver Widerstand erzeugt und bei der transformatorischen Anordnung außer der realen Messspannung noch eine imaginäre Messspannung erzeugt. Beide Anteil werden in komplexer Form in der Scheinwiderstandsebene bzw. der komplexen Spannungsebene dargestellt. In diesen beiden Beispielen macht sich die zerstörungsfreie Werkstoffprüfung den Effekt zu Nutze, dass die Veränderungen des Primärfeldes von den physikalischen und geometrischen Probeneigenschaften sowie den Geräteeigenschaften abhängen. Geräteeigenschaften sind u.a. die Frequenz, die Stromstärke, die Spannung und die Windungszahl der Spule. Probeneigenschaften sind u.a. elektrische Leitfähigkeit, Permeabilität, Probenform sowie Werkstoffinhomogenitäten im Bereich der Wirbelströme. Neuere Geräte zur induktiven Prüfung erlauben Messungen bei mehreren Anregungsfrequenzen. Dazu kann beispielsweise die Frequenz während einer Messung automatisch verändert werden, oder die Frequenz wird vom Benutzer während zweier Messungen manuell verstellt. Die Frequenz hat einen wesentlichen Einfluss auf die Eindringtiefe der Wirbelströme. Es gilt näherungsweise:

$$\delta = \frac{503}{\sqrt{f \cdot \sigma \cdot \mu_r}}$$

$\delta$ [mm] Eindringtiefe,
f [Hz] Frequenz,
$\sigma$ [MS/m = m/($\Omega$mm$^2$)] spezifische Leitfähigkeit,
$\mu_r$ relative Permeabilität.

Die Standardeindringtiefe verringert sich mit wachsender Frequenz.

In dem Artikel "Non-Destructive Testing of Corrosion Effect on High Temperature Protective Coatings" von G. Dibelius, H.J. Krischel und U. Reimann, VGB Kraftwerkstechnik 70 (1990), Nr. 9, ist eine zerstörungsfreie Prüfung von Korrosionsprozessen in Schutzschichten von Gasturbinenschaufeln beschrieben. Eine Messmethode bei Nickel-basierten Schutzschichten ist die Messung der magnetischen Permeabilität aufgrund eines sich im Korrosionsprozess ändernden Ferromagnetismus, d.h. der Werkstoff weist eine sehr hohe relative magnetische Permeabilität (> 100 -1000) auf, in der Schutzschicht. Für den Fall eines Platin-Aluminium-Schutzschichtsystems wird die Möglichkeit der Wirbelstrommessung diskutiert. Aufgrund der gemessenen Signalhöhen kann auf eine Schichtdicke der Schutzschicht geschlossen werden.

In dem Artikel "How to cast Cobalt-Based Superalloys" von M.J. Woulds in: Precision Metal, April 1969, S. 46, sowie in dem Artikel von M.J. Woulds und T.R. Cass, "Recent Developments in MAR-M Alloy 509", Cobalt, Nr. 42, Seiten 3 bis 13, ist beschrieben, dass es beim Gießen von Bauteilen wie auch Gasturbinenschaufeln zur Reaktion der erstarrenden oder bereits erstarrten Bauteiloberfläche mit dem Material der Gussschale kommen kann. Dabei kann es z.B. zur Oxidation von Carbiden im Gussbauteil kommen. Ein solcher Vorgang wird hier weiterhin als "Inner Carbiden Oxidation", ICO, bezeichnet. Die Entstehung von ICO hat einen Abbau von die Korngrenzen einer Legierung verstärkenden Carbiden zur Folge.

Insbesondere im oberflächennahen Bereich einer Gasturbinenschaufel kann dies zu einer erheblichen Materialschwächung führen. Die Legierungen werden üblicherweise im Vakuumguss vergossen. Der zur Oxidation erforderliche Sauerstoff kommt aus dem Material der Gussschale, z.B. Siliziumdioxid, Zirkondioxid oder Aluminiumoxid. Dadurch entstehen Oxidphasen auf den Korngrenzen. Die ursprünglichen Carbide werden beispielsweise zu Zirkon-, Titan- oder Tantal-reichen Oxiden transformiert. Die Tiefe des Bereichs, der oxidierte Carbide enthält, ist von Parametern abhängig, wie dem Kohlenstoffgehalt in der Legierung, der Zusammensetzung von Gussschalenmaterial und Gusslegierung oder auch der Abkühlgeschwindigkeit. Typischerweise kann eine solche oxidhaltige Schicht etwa 100 bis 300 μm dick sein. Für eine Qualitätskontrolle ist es wünschenswert, die die mechanischen Eigenschaften beeinträchtigenden Oxidbereiche oxidierter Carbide nachweisen zu können. Zerstörungsfrei ist dies bisher nicht möglich.

Nickel- und Kobalt-Basislegierungen neigen unter bestimmten Umgebungsbedingungen zur Ausbildung einer Korrosionsform, die Hochtemperatur-Korrosion (HTK) genannt wird. Aus werkstofftechnischer Sicht ist HTK eine an den Korngrenzen verlaufende, komplexe Sulfidation des Grundwerkstoffs. Mit voranschreitender HTK werden tragende Querschnitte von Bauteilen geschwächt. Die Kenntnis der Tiefe des HTK-Angriffs ist wichtig, um die Betriebssicherheit und Restlebensdauer eines Bauteils abschätzen zu können, und um zu entscheiden, ob eine Aufarbeitung (z.B. Refurbishment von Gasturbinenschaufeln) möglich ist.

Die US 5,028,100 offenbart ein Verfahren zur zerstörungsfreien Prüfung von Gasturbinenbauteilen.

Es ist Aufgabe der Erfindung ein Messverfahren aufzuzeigen, mit dem sich auch Hochtemperaturkorrosion (degradierte Bereiche) eines Bauteils, die sich insbesondere entlang von Korngrenzen ausbildet, ermitteln lässt. Weiterhin ist ein Verfahren zur Herstellung einer Gasturbinenschaufel angegeben, bei dem auf einen Grundkörper der Gasturbinenschaufel eine Korrosionsschutzschicht aufgebracht wird, wobei Qualität und Lebensdauer der Korrosionsschutzschicht besonders hoch sind.

Die Aufgabe wird erfindungsgemäß gelöst durch das Verfahren gemäß Patentanspruch 1. Vorteilhafte Weiterbildungen der Erfindung ergeben sich aus den Unteransprüchen.

Erfindungsgemäß wird die auf ein Verfahren zur zerstörungsfreien Prüfung eines Bauteils gerichtete Aufgabe gelöst durch ein Verfahren zur zerstörungsfreien Prüfung, bei dem zwei verschiedene Messfrequenzen benutzt werden.

Ein Verfahren zur Herstellung einer Gasturbinenschaufel ist angegeben, bei dem ein Grundkörper der Gasturbinenschaufel gegossen, die Oberfläche des Grundkörpers für das Aufbringen einer Korrosionsschutzschicht gereinigt und aktiviert und anschließend die Korrosionsschutzschicht aufgebracht wird, wobei nach dem Gießen und vor der Reinigung und Aktivierung mittels einer Wirbelstrommessung die Oberfläche auf das Vorhandensein von Oxidbereichen oxidierter Carbide untersucht wird.

Gerade bei einer Gasturbinenschaufel kommt es aufgrund der sowohl hohen thermischen als auch mechanischen Belastungen in besonderem Maße auf ein fehlerfreies Gefüge des Grundwerkstoffs an. In diesem Bereich ist also eine Qualitätsüberprüfung hinsichtlich ICO-haltiger bzw. korrodierter Bereiche von großem Wert.

Vorzugsweise ist die Legierung eine Nickel- oder Kobaltbasis-Superlegierung. Solche Superlegierungen sind im Gasturbinenbau bestens bekannt und zeichnen sich insbesondere durch eine besondere Hochwarmfestigkeit aus. Gerade solche Superlegierungen neigen aber dazu, beim Gießen mit dem Sauerstoff der Gussform zu reagieren und dabei die erwähnten ICO-Bereiche zu bilden.

Bei Gasturbinenschaufeln kommen häufig Korrosionsschutzschichten zum Einsatz, die auf einen Grundkörper aufgebracht werden. Der Grundkörper ist dabei vorzugsweise aus einer Nickel- oder Kobaltbasis-Superlegierung gebildet. Weiter bevorzugt besteht die Schutzschicht aus einer Legierung der Art MCrAlY, wobei M ausgewählt ist aus der Gruppe (Eisen, Kobalt, Nikkel), Cr Chrom, Al Aluminium und Y Yttrium ausgewählt ist aus der Gruppe (Yttrium, Lanthan, Seltene Erden). Eine solche Schutzschicht erfordert eine Vorbehandlung der Oberfläche des Grundkörpers um eine dauerhafte Haftung zwischen dem Grundkörper und der Schutzschicht zu gewährleisten. Ein geeigneter Reinigungsprozess, der gleichzeitig die Oberfläche für die gute Verbindung mit der Schutzschicht aktiviert, ist ein Sputter-Prozess, bei dem Ionen auf die Grundkörperoberfläche beschleunigt werden und die Oberfläche dabei über ihre kinetische Energie reinigen und aktivieren. Versuche haben nun ergeben, dass ICO-Bereiche in der Oberflächenschicht eine geeignete Reinigung und Aktivierung der Grundkörperoberfläche verhindern. Die ICO-Bereiche können durch den Sputter-Prozess nicht abgetragen werden. Sie werden regelrecht freigelegt, weil Metall oder Verunreinigungen, die sie zum Teil verdeckt haben, bevorzugt abgetragen werden, nicht aber die Oxide selbst. Dies führt zu einer wesentlichen Beeinträchtigung der Haftung der Schutzschicht auf dem Schaufelgrundkörper.

Um bereits vor dem aufwendigen Reinigungs- und Beschichtungsprozess bei einer Gasturbinenschaufel eine Aussage treffen zu können, ob ICO-haltige Bereiche an der Oberfläche des Grundkörpers vorhanden sind, wird die Wirbelstrommessung eingesetzt. Hierdurch ist man nun erstmals in der Lage, kostengünstig bereits im Vorfeld die Schaufeln mit ICO-haltigen Bereichen über einen Schleifprozess zu reinigen oder bereits im Vorfeld auszusondern. Erfolgreich gereinigte Schaufeln oder von vorn herein nicht ICO-Bereich-belastete Schaufeln werden sodann mit der Schutzschicht versehen, was vorzugsweise durch ein Plasmaspritzen geschieht.

Die Zusammensetzung der Grundkörper-Superlegierung ist bevorzugt wie folgt (Angaben in Gewichtsprozenten):

24% Chrom, 10% Nickel, 7% Wolfram, 3,5% Tantal, 0,2% Titan,

0,5% Zirkon, 0,6% Kohlenstoff und der Rest Kobalt. Diese Legierung wird auch unter dem Handelsnamen MAR-M 509 geführt.

Die Erfindung wird anhand der Zeichnung beispielhaft näher erläutert. Es zeigen teilweise schematisch und nicht maßstäblich:

Figur 1 ein Verfahren zur Prüfung einer Gasturbinenschaufel auf ICO-Bereiche,

Figur 2 eine Gasturbinenschaufel mit sichtbaren ICO-Bereichen,

Figur 3 einen Teil eines Längsschnittes durch den Grundkörper einer Gasturbinenschaufel mit einer ICO-Schicht,

Figur 4 Messkurven, die bei dem erfindungsgemässen Verfahren ermittelt werden,

Figur 5 schematisch einen oberflächennahen Bereich eines Bauteils, das degradiert ist, und

Figur 6 eine beispielhafte Sonde für das erfindungsgemässe Verfahren.

Gleiche Bezugszeichen haben in den verschiedenen Figuren die gleiche Bedeutung.

Es hat sich überraschenderweise herausgestellt, dass die degradierten Bereiche, insbesondere die Oxidbereiche oxidierter Carbide (ICO, siehe oben) bzw. die Korrosionsbereiche von sulfidiertem Grundwerkstoff mit hinreichender Genauigkeit über eine Wirbelstrommessung nachgewiesen werden können. Eine solche Wirbelstrommessung beruht, wie oben ausgeführt, insbesondere auf der vom Grundmaterial verschiedenen elektrischen Leitfähigkeit innerhalb der degradierten oder der ICO-Bereiche. Versuche konnten weiterhin belegen, dass die Empfindlichkeit des Verfahrens sogar ausreicht, eine Bestimmung der Tiefe der vorliegenden ICO-haltigen Bereiche (bspw. schichtförmig angeordnet oder bis zu einer gewissen Schichtdicke vorhanden) zu bestimmen. Wie oben ausgeführt, sind dazu Wirbelstrommessungen bei unterschiedlichen Anregungsfrequenzen (Messfrequenzen) nötig. Bei geeignet tiefen Frequenzen ist die Wirbelstromausbreitung in dem ICO-haltigen Bereich zu vernachlässigen, so dass die Messung nur durch die Eigenschaften des Grundwerkstoffes bestimmt wird. In einem Übergangsbereich wird die Änderung des Primärfeldes durch die Wirbelströme sowohl im ungestörten Grundwerkstoff als auch in dem ICO-haltigen Bereich bedingt. Ab einer gewissen Frequenzhöhe breitet sich das Wirbelstromfeld nur in dem ICO-haltigen Bereich aus. Es tritt demzufolge ein definierter Übergang in der Messgröße (z.B. Leitfähigkeit oder Permeabilität) als Funktion der Anregungsfrequenz auf. Durch Korrelation der Frequenz, bei welcher der Einfluss der ICO-haltigen Schicht überwiegt, mit der Eindringtiefe des Wirbelstromfeldes lässt sich die Tiefe des ICO-haltigen Bereichs bestimmen.

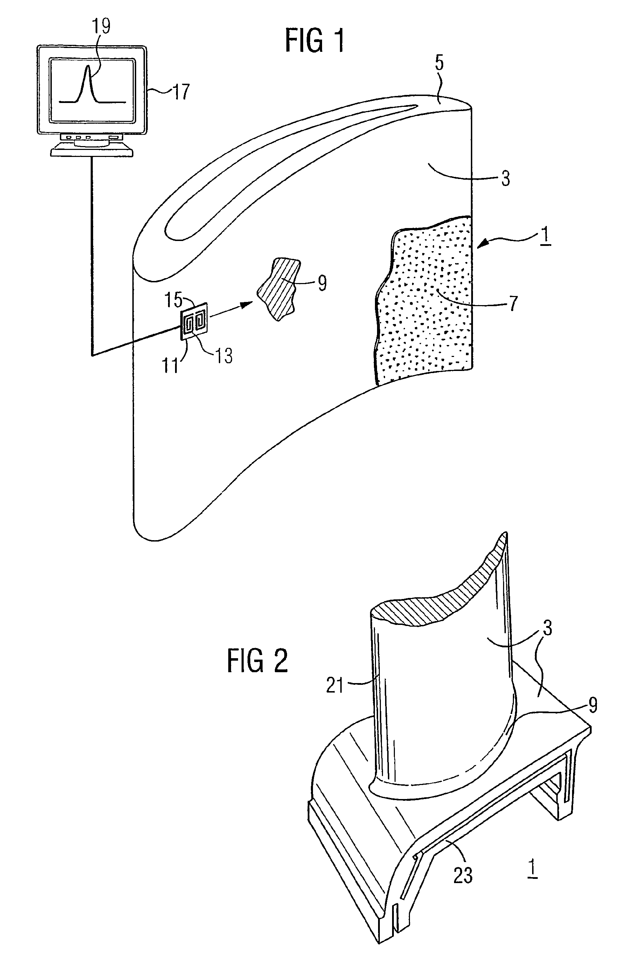

Figur 1 zeigt schematisch ein Verfahren zur zerstörungsfreien Prüfung eines Bauteils 1, insbesondere einer Gasturbinenschaufel 1, mittels eines Wirbelstromprüfverfahrens. Die Gasturbinenschaufel 1 weist eine Oberfläche 3 auf. Auf der Oberfläche 3 ist in einem Teilbereich eine Schutzschicht 7 aufgebracht, welche der Vollständigkeit halber in Figur 1 aufgenommen wurde, obwohl das Aufbringen dieser Schutzschicht 7 erst nach einer erfolgten Wirbelstromprüfung durchgeführt wird. In der Oberfläche 3 ist ein degradierter Bereich, bspw. ein Korrosionsbereich 9 oder ein Oxidbereich 9 oxidierter Carbide durch eine Reaktion mit einer nicht dargestellten Formschale im Gussprozess beim Abgießen der Gasturbinenschaufel 1 entstanden. Durch Reaktion mit Sauerstoff aus dieser Formschale haben sich in diesem Korrosionsbereich 9 bzw. Oxidbereich 9 Carbide in Oxide umgewandelt. Ebenso können in der Oberfläche 3 durch Hochtemperaturkorrosion, bspw. im Einsatz, ein Korrosionsbereich 9 von sulfidiertem Grundmaterial entstanden sein.

Dies führt einerseits dazu, dass die Festigkeit des Grundkörpermaterials in diesem Bereich herabgesetzt ist, da die die Korngrenzen verfestigende Wirkung der Carbide entfällt. Weiterhin hat dies zur Folge, dass ein vor dem Aufbringen der Schutzschicht 7 erfolgender Reinigungs- und

Aktivierungsprozess mittels eines Sputterns im Korrosionsbereich 9 ohne Wirkung bleibt. Hierdurch wird die Haftung der Schutzschicht 7 auf dem Grundkörper 5 erheblich beeinträchtigt.

Um bereits vor dem aufwendigen Reinigungs- und Beschichtungsprozess störende Korrosionsbereiche 9 zu ermitteln, wird ein Wirbelstrommessverfahren angewandt. Hierzu wird eine Wirbelstromsonde 11 über die Oberfläche 3 geführt, die direkt auf der Oberfläche 3 aufliegt.

Auf einem flexiblen Kunststoffträger 15 sind elektrische Spulen 13 angeordnet, durch die mittels eines Wechselstroms durch die Spulen 13 ein magnetisches Feld erzeugt wird. Dieses induziert in der Oberfläche 3 elektrische Ströme, die wiederum über ihr Magnetfeld in die Spulen 13 zurückkoppeln. Dies wird als Signal 19 in einer Auswerteeinheit 17 sichtbar, die mit der Wirbelstromsonde 11 verbunden ist. Abhängig insbesondere von der elektrischen Leitfähigkeit, aber auch von der magnetischen Permeabilität des Materials im Bereich der Wirbelstromsonde 11 ergibt sich ein unterschiedlich starkes Signal 19. Durch eine unterschiedliche elektrische Leitfähigkeit und magnetische Permeabilität in dem Korrosionsbereich 9 ist dieser mittels der Wirbelstromsonde 11 detektierbar.

Darüber hinaus kann durch eine Frequenzänderung im Wechselfeld der Wirbelstromsonde 11 eine Tiefenbestimmung für den Korrosionsbereich 9 durchgeführt werden. Somit ist es erstmals möglich, zerstörungsfrei Korrosionsbereiche (ICO) 9 nachzuweisen. Dies hat insbesondere erhebliche Kostenvorteile als Konsequenz, da die Schaufeln bereits vor einem aufwendigen Reinigungs- und Beschichtungsprozess sauber geschliffen bzw. ausgesondert werden können.

Figur 2 zeigt nach einem Reinigungs- und Aktivierungsprozess mittels Sputtern sichtbar gewordene ICO-Bereiche 9 bei einer Gasturbinenschaufel 1. Die ICO-Bereiche 9 sind hier insbesondere konzentriert in einem Übergangsbereich zwischen dem Schaufelblatt 21 und dem Befestigungsbereich 23.

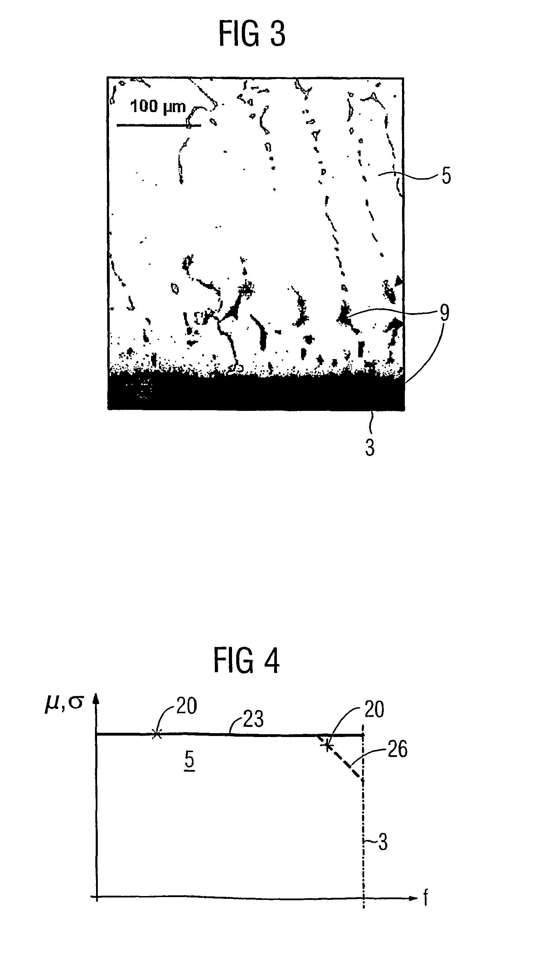

In Figur 3 ist in einem Längsschnitt die Ausbildung eines ICO-Bereichs 9 an der Oberfläche 3 des Bauteils 1 dargestellt. Das Bauteil 5 besteht aus der oben genannten MAR-M 509 Kobaltbasis-Superlegierung. Die Dicke der ICO-Schicht liegt bei ca. 100 $\mu$m.

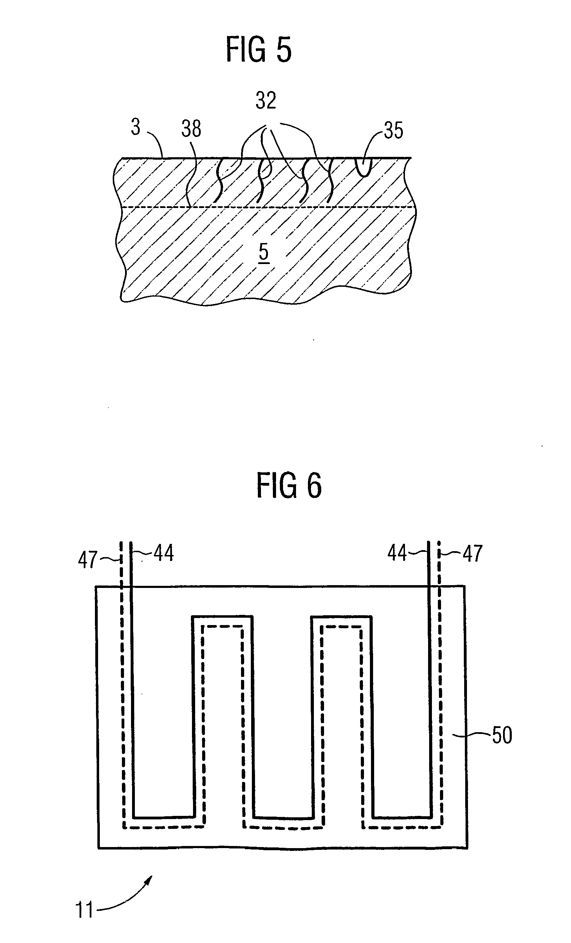

Figur 4 stellt die Messkurven dar, die man mit dem erfindungsgemässen Verfahren ermittelt.
Bestimmt wird die magnetische Permeabilität $\mu$ (und daraus die relative magnetische Permeabilität $\mu_r$) oder die elektrische Leitfähigkeit ($\sigma$) in Abhängigkeit von der Frequenz f.
Die verwendeten Werkstoffe haben eine sehr geringe magnetische Permeabilität $\mu_r$ ungefähr gleich 1 (1,001) oder maximal 1,2.
Eine Messsonde (Fig. 6) wird auf den Grundwerkstoff oder das Substrat aufgelegt, wobei dann die Frequenz f in einem Bereich von 500 kHz bis 35 MHz verändert wird.

Je grösser die Frequenz wird, desto kleiner wird das Wechselwirkungsvolumen, das durch die Wirbelströme erzeugt wird.

So werden zumindest zwei Messpunkte 20 gemessen.
Bei kleinen Frequenzen f ist das Wechselwirkungsvolumen sehr groß, so dass fast ausschließlich nur die Eigenschaften des Grundwerkstoffs gemessen werden und Veränderungen dieser Grössen im oberflächennahen Bereich vernachlässigbar sind. Diese Art der Messung ist vergleichbar mit einem nichtkorrodierten Grundwerkstoff.
Die Messkurve 23 des Grundwerkstoffs ist also schon durch einen einzigen Messpunkt bestimmt, da diese eine Parallele zur Frequenzachse ergibt. Es können jedoch auch noch mehr Messpunkte 20 zur Bestimmung der Parallelen aufgenommen werden.

Nachdem man mit kleinen Frequenzen f, also bei grossen Wechselwirkungsvolumen (Eindringtiefen), die nur die Eigenschaften des Substrats ergeben, begonnen hat, wird die Frequenz f weiter erhöht (2. Messpunkt), wodurch das Wechselwirkungsvolumen (Eindringtiefe) kleiner wird. Das Wechselwirkungsvolumen wird so klein, dass es sich fast ausschließlich nur noch im Bereich der Oberfläche 3 des Bauteils 1 befindet. Gerade in diesem Bereich sind bspw. ausschliesslich oder sehr häufig degradierte, d.h. korrodierte, oxidierte oder sulfidierte Bereiche vorhanden. Die magnetische Permeabilität oder elektrische Leitfähigkeit dieser degradierten Bereiche ist verändert und ergibt eine Abweichung der Messkurve 26 des Bauteils 1.

Somit können in einem Frequenzscan die Eigenschaften des Grundwerkstoffs und die Lage und Grösse der korrodierten Bereiche ermittelt werden.
Der zu untersuchende Bereich muss nicht in magnetischer Sättigung liegen.

Figur 5 zeigt einen oberflächennahen Bereich eines Bauteils, das korrodiert ist.
Ausgehend von der Oberfläche 3 sind Korngrenzen 32 vorhanden, die oxidiert, korrodiert oder auf sonstige Art und Weise degradiert sind. Dies können auch oxidierte Ausscheidungen sein. Ebenso können im Bereich der Oberfläche 3 Löcher 35 vorhanden sein, bei denen schon Material aus der Oberfläche 3 herausgebrochen sind. Bei entsprechend hoch genug gewählter Frequenz f ist das Wechselwirkungsvolumen 38 so ausgebildet, dass es an die korrodierten Bereiche 9 angrenzt. Das Messsignal wird dann von den korrodierten Korngrenzen 32 und den Löchern 35 in einem stärkeren Maße beeinflusst. Diese Veränderung wird mit dem Messsignal registriert und zeigt an, dass eine Störung des Bauteils oder des Substrats vorliegt.

Figur 6 zeigt eine beispielhafte Sonde 11, die für dieses Messverfahren geeignet ist.
Eine Erregerspule 44 und eine Signalspule 47 sind mäanderförmig auf einem Substrat oder einer Folie 50 angeordnet. Zur näheren Anordnungsweise und Funktionsweise der Spulen wird auf die US-PS 5,793,206 verwiesen. Diese Patentschrift soll ausdrücklich in die Offenbarung dieser Anmeldung einbezogen sein. Im Gegensatz zur bisherigen Verwendung dieser Sonde (Schichtdickenmessung), wird diese Spule 11 mit verschiedenen Frequenzen f beaufschlagt, wie es schon in Figur 4 beschrieben wurde.

**Patentansprüche**

1. Verfahren zur zerstörungsfreien Prüfung eines Bauteils (1) mit einem Grundkörper (5) aus einem Grundwerkstoff, insbesondere einer Gasturbinenschaufel (1),
   bei dem mittels einer Wirbelstrommessung Bereiche (9) des Grundkörpers (5),
   die degradiert sind,
   ermittelt werden,
   wobei zur Wirbelstrommessung mindestens zwei verschiedene Messfrequenzen (f) verwendet werden, **dadurch gekennzeichnet, dass** der Grundkörper (5) und die Bereiche (9) keine ferromagnetischen Materialien enthalten, und daß eine tiefe Frequenz verwendet wird um die Eingenschaften des Grundwerkstoffs zu messen und eine hohe Frequenz verwendert wird um die magnetische Permeabilität oder elektrische Leitfähigkeit der degradierten Bereiche zu messen.

2. Verfahren nach Anspruch 1,
   bei dem zuerst eine tiefe Frequenz (f) und dann eine hohe Frequenz (f) verwendet wird.

3. Verfahren nach Anspruch 1 oder 2,
bei dem die Frequenz (f) kontinuierlich von einer tiefen Frequenz (f) zu einer hohen Frequenz (f) in einem Frequenzscan verändert wird.

4. Verfahren nach Anspruch 1, 2 oder 3,
bei dem oberflächennahe Oxidbereiche (9) oxidierter Carbide des Grundkörpers (5) die degradierten Bereiche (9) darstellen.

5. Verfahren nach Anspruch 1, 2, 3, oder 4
bei dem der Grundkörper (5) aus einer carbidhaltigen Legierung besteht.

6. Verfahren nach Anspruch 1, 2 oder 3,
**dadurch gekennzeichnet, dass**
bei dem oberflächennahe sulfidierte Bereiche (9) der Grundkörper (5) die degradierten Bereiche (9) darstellen.

7. Verfahren nach Anspruch 1, 2 oder 3,
**dadurch gekennzeichnet, dass**
eine Messsonde mit mäanderförmigen Spulen verwendet wird.

8. Verfahren nach Anspruch 1, 2 oder 3,
**dadurch gekennzeichnet, dass**
die relative magnetische Permeabilität des Grundkörpers (5) kleiner oder gleich 1,2 ist.

9. Verfahren nach Anspruch 1, 2 oder 3,
**dadurch gekennzeichnet, dass**
eine Frequenz (f) zur Wirbelstrommessung im Bereich von 500 kHz bis 35 MHz liegt.

10. Verfahren nach Anspruch 1, 2 oder 3,
**dadurch gekennzeichnet, dass**
eine Messsonde (11) zur Wirbelstrommessung direkt auf der Oberfläche (3) des Grundkörpers (5) aufliegt.

11. Verfahren nach Anspruch 1,
bei dem der Grundkörper (5) aus einer Nickel- oder Kobaltbasis-Superlegierung besteht.

12. Verfahren nach Anspruch 1 oder 3,
bei dem die degradierten Bereiche (9) eine geringe elektrische Leitfähigkeit aufweisen.

13. Verfahren nach Anspruch 1 oder 3,
**dadurch gekennzeichnet, dass**
in einem der ersten Verfahrensschritte eine Messgröße des Grundwerkstoffs und
in einem folgenden Verfahrensschritt eine Messgröße des degradierten Bereichs gemessen wird.

14. Verfahren nach Anspruch 13,
**dadurch gekennzeichnet, dass**
sich die Messgröße während der Wirbelstrommessung in Abhängigkeit von der Frequenz (f) verändert.

15. Verfahren nach Anspruch 13 oder 14,
**dadurch gekennzeichnet, dass**
die Messgröße die magnetische Permeabilität $\mu$ oder die elektrische Leitfähigkeit ($\sigma$) ist.

**Claims**

1. A method for the nondestructive testing of a component (1), having a base body (5) made from a base material, in particular of a gas turbine blade or vane (1), in which regions (9) of the base body (5) which are degraded are determined by means of an eddy current measurement, at least two different measurement frequencies (f) being used for the eddy current measurement, **characterised in that** the base body (5) and the regions (9) do not contain any ferromagnetic materials and **in that** a low frequency is used to measure the properties of the base material and a high frequency is used to measure the magnetic permeability or electrical conductivity of the degraded regions.

2. Method according to claim 1, in which a low frequency (f) is used initially, followed by a high frequency (f).

3. Method according to claim 1 or 2, in which the frequency (f) is changed continuously from a low frequency (f) to a high frequency (f) in one frequency scan.

4. Method according to claim 1, 2 or 3, in which oxide regions (9) which are close to the surface and are composed of oxidized carbides of the base body (5) represent the degraded regions (9).

5. Method according to claim 1, 2, 3 or 4, in which the base body (5) consists of a carbide-containing alloy.

6. Method according to claim 1, 2 or 3, **characterized in that** sulfided regions (9) of the base body (5) which lie close to the surface represent the degraded regions (9).

7. Method according to claim 1, 2 or 3, **characterized in that** a measurement probe with coils in meandering form is used.

8. Method according to claim 1, 2 or 3, **characterized in that** the relative magnetic permeability of the base body (5) is less than or equal to 1.2.

9. Method according to claim 1, 2 or 3, **characterized in that** a frequency (f) for the eddy current measurement is in the range from 500 kHz to 35 MHz.

**10.** Method according to claim 1, 2 or 3, **characterized in that** a measurement probe (11) for the eddy current measurement rests directly on the surface (3) of the base body (5).

**11.** Method according to claim 1, in which the base body (5) consists of a nickel- or cobalt-base superalloy.

**12.** Method according to claim 1 or 3, in which the degraded regions (9) have a low electrical conductivity.

**13.** Method according to claim 1 or 3, **characterized in that** a measurement variable of the base material is measured in one of the first method steps, and a measurement variable of the degraded region is measured in a subsequent method step.

**14.** Method according to claim 13, **characterized in that** the measurement variable changes during the eddy current measurement as a function of the frequency (f).

**15.** Method according to claim 13 or 14, **characterized in that** the measurement variable is the magnetic permeability $\mu$ or the electrical conductivity ($\sigma$).

**Revendications**

**1.** Procédé pour effectuer un essai non destructif sur une pièce (1) ayant un corps (5) de base en un matériau de base, notamment une aube (1) de turbine à gaz,
dans lequel on détermine,
au moyen d'une mesure de courant de Foucault, des zones (9) du corps (5) de base
qui sont dégradées,
en utilisant pour la mesure des courants de Foucault au moins deux fréquences (f) différentes de mesure, **caractérisé en ce que** le corps (5) de base et les zones (9) n'ont pas de matériaux ferromagnétiques, et **en ce qu'**on utilise une fréquence basse pour mesurer les propriétés du corps de base et on utilise une fréquence haute pour mesurer la perméabilité magnétique ou la conductivité électrique des zones dégradées.

**2.** Procédé suivant la revendication 1,
dans lequel on utilise une fréquence (f) basse et ensuite une fréquence (f) haute.

**3.** Procédé suivant la revendication 1 ou 2,
dans lequel on modifie la fréquence (f) continuellement d'une fréquence (f) basse à une fréquence (f) haute dans un balayage de fréquence.

**4.** Procédé suivant la revendication 1, 2 ou 3,
dans lequel des zones (9) d'oxyde proches de la surface de carbure oxydé du corps (5) de base représentent les zones (9) dégradées.

**5.** Procédé suivant la revendication 1, 2, 3 ou 4, dans lequel le corps (5) de base est en un alliage contenant du carbure.

**6.** Procédé suivant la revendication 1, 2 ou 3, **caractérisé en ce que** des zones (9) sulfurées proches de la surface du corps (5) de base représentent les zones (9) dégradées.

**7.** Procédé suivant la revendication 1, 2 ou 3, **caractérisé en ce qu'**on utilise une sonde de mesure ayant des bobines de forme sinueuse.

**8.** Procédé suivant la revendication 1, 2 ou 3, **caractérisé en ce que** la perméabilité magnétique relative du corps (5) de base est inférieure ou égale à 1,2.

**9.** Procédé suivant la revendication 1, 2 ou 3, **caractérisé en ce qu'**une fréquence (f) de mesure du courant de Foucault est de l'ordre de 500 kHz à 35 MHz.

**10.** Procédé suivant la revendication 1, 2 ou 3, **caractérisé en ce que** l'on applique une sonde (11) de mesure des courants de Foucault directement à la surface (3) du corps (5) de base.

**11.** Procédé suivant la revendication 1,
dans lequel le corps (5) de base est en un superalliage à base de nickel ou à base de cobalt.

**12.** Procédé suivant la revendication 1 ou 3,
dans lequel les zones (9) dégradées ont une petite conductivité électrique.

**13.** Procédé suivant la revendication 1 ou 3, **caractérisé en ce que** l'on mesure, dans l'un des premiers stades du procédé, une grandeur de mesure du matériau de base et
on mesure, dans un stade suivant du procédé, une longueur de mesure de la zone dégradée.

**14.** Procédé suivant la revendication 13, **caractérisé en ce que** la grandeur de mesure se modifie pendant la mesure des courants de Foucault en fonction de la fréquence (f).

**15.** Procédé suivant la revendication 13 ou 14, **caractérisé en ce que** la grandeur de mesure est la perméabilité ($\mu$) magnétique ou la conductivité ($\sigma$) électrique.

## FIG 1

## FIG 2

## FIG 3

## FIG 4

# FIG 5

# FIG 6